# EUROPÄISCHE PATENTSCHRIFT

(11) **EP 0 321 742 B1**
(45) Veröffentlichungstag und Bekanntmachung des Hinweises auf die Patenterteilung: **03.02.1993**
(21) Anmeldenummer: 88119896.4
(22) Anmeldetag: 29.11.1988
(51) Int. Cl.: B29B 17/00, B29B 13/10, B29C 47/10

(54) **Vorrichtung zum Aufbereiten von thermoplastischem Kunststoffgut**
Apparatus for processing thermoplastic material
Dispositif pour la régénération de matière thermoplastique

(30) Priorität: 04.12.1987 DE 8716077 U
(43) Veröffentlichungstag der Anmeldung: 28.06.1989
(73) Patentinhaber: PLASTMACHINES GELDERLAND GMBH DEUTSCHLAND, 82178 Puchheim (DE)
(72) Erfinder: Matthes, Gerhard, D-8039 Puchheim (DE)
(74) Vertreter: Diehl, Hermann O. Th., Dr.

(56) Entgegenhaltungen:
- EP-A- 0 123 771
- DE-A- 3 525 554
- FR-A- 1 558 627
- FR-A- 2 046 857
- US-A- 2 382 655
- US-A- 2 822 237
- US-A- 3 552 722
- US-A- 4 222 728

## Beschreibung

Die Erfindung betrifft eine Vorrichtung zum Aufbereiten von thermoplastischem Kunststoffgut, mit
a) einem stehend angeordneten Aufnahmebehälter, in dessen Bodenbereich ein um die Behälterachse drehbares Zerkleinerungs- und Mischwerkzeug und eine Mantelöffnung zum Auslaß des in der Vorrichtung erzeugten Kunststoffgranulates und gegebenenfalls der beim Aufbereiten verwendeten Waschflüssigkeit angeordnet sind, und
b) einer von einem Antriebsmotor mit regelbarer Drehzahl angetriebenen Transportschnecke, welche die Mantelöffnung des Aufnahmebehälters mit einem weiteren Plastifizierungsaggregat, wie z.B. einem Extruder oder einer Spritz- oder Druckgußmaschine, verbindet.

Eine Vorrichtung dieser Art ist Gegenstand der DE-A-35 25 554. Bei der bekannten Vorrichtung soll die gleichmäßige Befüllung der mit verschiedenen Geschwindigkeiten antreibbaren Förderschnecke dadurch sichergestellt werden, daß die Förderschnecke in einer taschenartigen Erweiterung der Umfangswand des Aufnahmebehälters untergebracht ist. Mit dieser Anordnung wird der angestrebte Zweck jedoch nur unvollkommen erreicht.

Demgegenüber wird gemäß der vorliegenden Erfindung in einfachster Weise eine unter allen Betriebsbedingungen ausreichende Füllung der mit regelbarer Geschwindigkeit angetriebenen Förderschnecke sowie eine effektive Arbeitsweise der Anlage, auch bei unregelmäßigem Anfall des Kunststoffgutes, dadurch gewährleistet, daß
c) die Transportschnecke etwa in Höhe des Zerkleinerungs- und Mischaggregates tangential zur Mantelfläche des Aufnahmebehälters an der Mantelfläche angeordnet ist,
d) die Transportschnecke einschließlich ihres Schneckengehäuses um eine zur Achse des Aufnahmebehälters senkrechte Achse schwenkbar ist, und
e) die Mantelöffnung mittels eines Schiebers und/oder eines Siebes verschließbar ist.

Diese erfindungsgemäße Anordnung bietet außerdem die Möglichkeit, bereits in Betrieb befindliche Anlagen in kostengünstiger Weise nachträglich mit einer Zerkleinerungs- und Tranporteinheit auszurüsten und dadurch die gesamten Investitionskosten für die relativ kostenintensive Zerkleinerungs- und Plastifizierungseinheit zu senken.

Ferner ergibt sich eine verbesserte Möglichkeit, das Verhältnis zwischen frischem und aufbereitetem Kunststoffgranulat entsprechend dem jeweiligen Anfall dieser beiden Stoffe und den an das fertige Produkt zu stellenden Anforderungen zu verändern und einzustellen und dadurch eine effektive Arbeitsweise der Anlage zu gewährleisten.

Einzelheiten der Erfindung ergeben sich aus den Unteransprüchen und der Beschreibung, worin im folgenden anhand der Zeichnungen einige Ausführungsbeispiele erörtert werden. Es zeigen:
- Fig.1: einen Schnitt durch die erfindungsgemäße Vorrichtung entlang der Linie I-I in Fig.2;
- Fig. 2: einen Schnitt durch die Vorrichtung entlang der Linie II-II in Fig. 1;
- Fig. 3: einen Schnitt durch die Vorrichtung entlang der Linie III-III in Fig. 1;
- Fig. 4: die Einleitung des Kunststoffgranulates in das Plastifizierungsaggregat mittels eines Krümmers; und
- Fig. 5: eine gegenüber der Achse des Aufnahmebehälters verdrehte Transportschnecke.

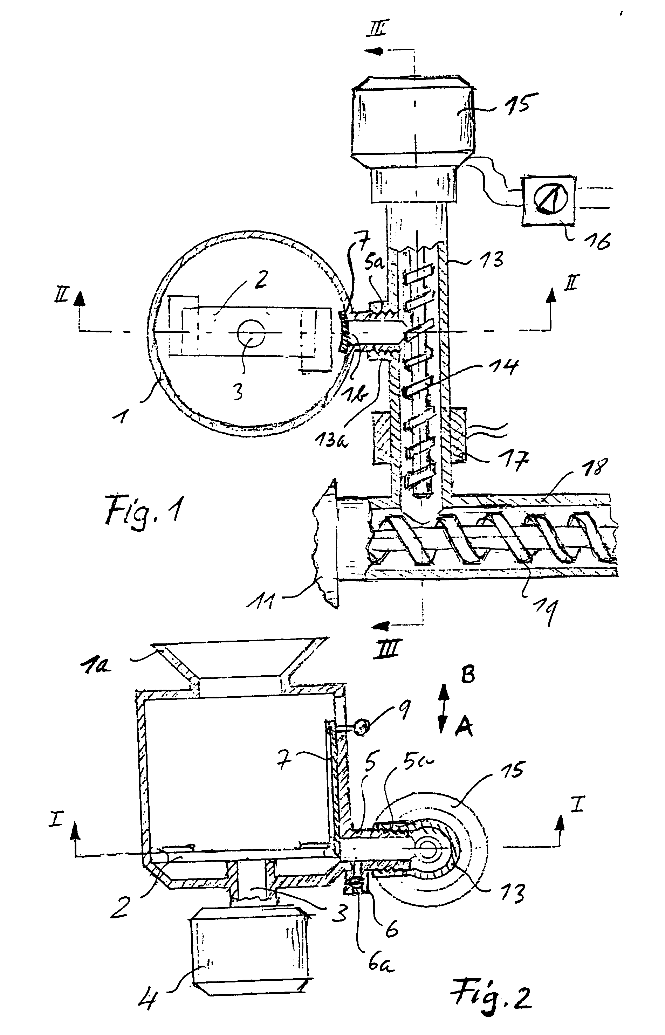

Gemäß den Figuren 1 und 2 ist in einem stehend angeordneten Behälter 1 ein Zerkleinerungs- und Mischwerkzeug 2 auf einer Welle 3 drehbar gelagert. Der Antrieb des Zerkleinerungs- und Mischwerkzeuges 2 erfolgt mittels eines an den Aufnahmebehälter 1 angeflanschten Antriebsmotors 4. Am oberen Ende des Aufnahmebehälters 1 ist ein Einfülltrichter 1a ausgebildet.

Der Aufnahmebehälter 1 weist eine Mantelöffnung 1b auf, an der ein Verbindungsstutzen 5 angeschlossen ist. Im Inneren des Aufnahmebehälters 1 ist ein Schieber und/oder ein bewegliches Sieb 7 angeordnet. Das Sieb verhindert in geschlossenem Zustand den Durchtritt des im Aufnahmebehälter 1 entstehenden Kunststoffgranulates und erlaubt lediglich den Ablauf überschüssiger Waschflüssigkeit, während mittels eines Schiebers das Verbindungsrohr 5 bzw. die Mantelöffnung 1b völlig abgesperrt werden kann. Die Betätigung des Siebes bzw. des Schiebers 7 erfolgt mittels eines äußeren Handgriffes 9, welcher den Schieber bzw. das Sieb 7 in Pfeilrichtung A-B bewegt. Am Verbindungsstutzen 5 ist noch ein mittels eines Hahnes 6a abschließbares Flüssigkeitsablaufrohr 6 angeordnet, durch welches die das Sieb passierende Waschflüssigkeit ablaufen kann.

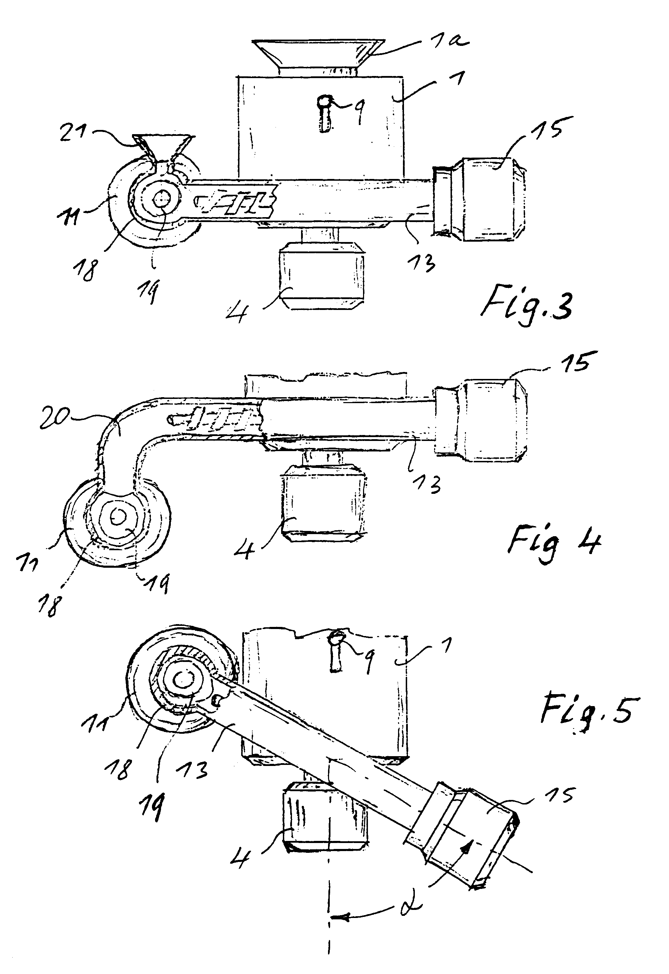

Am Ende des Verbindungsstutzens 5 ist ein Gewinde 5a ausgebildet, auf welches der Flansch 13a eines Schneckengehäuses 13 aufgeschraubt ist. Wenn der Flansch 13a nicht bis zu einem Anschlag auf das Gewinde 5a aufgeschraubt ist, kann das Schneckengehäuse 13 in der in Fig. 5 gezeigten Weise um einen beliebigen Winkel gegenüber der Achse des Aufnahmebehälters 1 verschwenkt werden. Dies erleichtert die nachträgliche Angliederung der erfindungsgemäßen Zerkleinerungseinheit an bestehende Anlagen. Natürlich kann anstelle der Gewindeverbindung auch irgendeine andere, für den vorliegenden Zweck ausreichend flüssigkeitsdichte, schwenkbare Lagerung des Schneckengehäuses 13 vorgesehen werden.

Im Schneckengehäuse 13 ist eine Transportschnecke 14 drehbar gelagert, die mittels eines Getriebemotors 15 angetrieben ist. Der Getriebemotor 15 ist an eine Geschwindigkeitsregelung 16, beispielsweise eine Phasenanschnittsteuerung, angeschlossen, die es erlaubt, die Drehzahl der Transportschnecke 14 feinstufig oder stufenlos dem jeweils benötigten Materialdurchsatz anzupassen. Die Transportschnecke 14 kann mit progressivem Kerndurchmesser und/oder mit konischem Außendurchmesser ausgeführt sein. Am unteren Ende des Schneckengehäuses 13 ist eine Heizvorrichtung 17 angeordnet, mittels welcher ggf. ein vorzeitiges Erkalten des geförderten Kunststoffgranulates verhindert werden kann.

Am unteren Ende des Schneckengehäuses 13 ist ferner ein Extrudergehäuse 18 befestigt, in welchem sich eine an einem Antriebsmotor 11 angetriebene Extruderschnecke 19 dreht. Auch das Extrudergehäuse 18 kann in der für das Schneckengehäuse 13 gezeigten Weise zur besseren Anpassung an bestehende Anlagen um eine zur Extruderachse senkrechte Achse schwenkbar gelagert sein.

Gemäß Fig. 3 ist das Extrudergehäuse 18 an der Verbindungsstelle zum Schneckengehäuse 13 mit einer nach oben offenen Entlüftungsöffnung 21 zur Abscheidung von gasförmigen Bestandteilen des geförderten Kunststoffgranulates ausgestattet. Um das Einführen von Zuschlagsstoffen in den Extruder von Hand zu gestatten, ist die Entlüftungsöffnung als nach oben offener Trichter ausgeschildert. In Fig. 4 ist der Auslauf der Transportschnecke 13,14 oberhalb des Einlaufes des als weiteres Plastifizierungsaggregat dienenden Schneckenextruders 18,19 angeordnet und mittels eines Umlenkkrümmers 20 mit diesem verbunden.

## Patentansprüche

1. Vorrichtung zum Aufbereiten von thermoplastischem Kunststoffgut, mit
a) einem stehend angeordneten Aufnahmebehälter (1), in dessen Bodenbereich ein um die Behälterachse drehbares Zerkleinerungs- und Mischwerkzeug (2) und eine Mantelöffnung (1b) zum Auslaß des in der Vorrichtung erzeugten Kunststoffgranulates und gegebenenfalls der beim Aufbereiten verwendeten Waschflüssigkeit angeordnet sind, und
b) einer von einem Antriebsmotor (15) mit regelbarer Drehzahl angetriebenen Transportschnecke (13,14), welche die Mantelöffnung (1b) des Aufnahmebehälters (1) mit einem weiteren Plastifizierungsaggregat (18,19), wie z.B. einem Extruder oder einer Spritz- oder Druckgußmaschine, verbindet,
**gekennzeichnet** durch folgende Kombination:
c) die Transportschnecke (13,14) ist etwa in Höhe des Zerkleinerungs- und Mischaggregates (2) tangential zur Mantelflache des Aufnahmebehälters (1) an der Mantelöffnung (1b) angeordnet,
d) die Transportschnecke (14) ist einschließlich ihres Schneckengehäuses (13) um eine zur Achse des Aufnahmebehälters (1) senkrechte Achse schwenkbar, und
e) die Mantelöffnung (1b) ist mittels eines Schiebers und/oder eines Siebes (7) verschließbar.

2. Vorrichtung nach Anspruch 1, dadurch gekennzeichnet, daß am Anfang und/oder am Ende der Transportschnecke (13,14) eine Entlüftungsöffnung (21) zur Abscheidung gasförmiger Bestandteile des erzeugten Granulates vorgesehen ist.

3. Vorrichtung nach Anspruch 1 oder 2, dadurch gekennzeichnet, daß das schwenkbar an der Mantelöffnung (1b) angeordnete Gehäuse (13) der Transportschnecke (14) mittels eines koaxial zur Schwenkachse angeordneten Verbindungsstutzens (5) mit dem Aufnahmebehälter (1) verbunden ist, und daß der Verbindungsstutzen ein mittels eines Hahnes (6a) oder dergleichen verschließbares Flüssigkeitsablaufrohr (6) trägt.

4. Vorrichtung nach einem der Ansprüche 1 bis 3, dadurch gekennzeichnet, daß die Mantelöffnung (1b) mittels eines Siebes (7) verschließbar ist, welches den Durchtritt des Kunststoffgranulates verhindert und lediglich den Durchtritt von Waschflüssigkeit und etwaiger bei der Aufbereitung des Granulates entstehender Gase und/oder Dämpfe gestattet.

5. Vorrichtung nach einem der vorhergehenden Ansprüche, dadurch gekennzeichnet, daß die am Anfang und/oder Ende der Transportschnecke (13,14) vorgesehene Entlüftungsöffnung (21) als Trichter zum Zufüllen frischen Kunststoffgranulates oder anderer Zuschlagstoffe ausgebildet ist.

## Claims

1. A device for preparing thermoplastic material comprising
a) an intake receptacle (1) in its upright position, the bottom part of which holds a size reduction and mixing unit (2) rotatable around the receptacle's axis, and a case opening (1b) as an outlet for the plastic granules produced in the device and, if need be, for the washing liquid used in the preparing process, and
b) a feed screw (13, 14) driven by a drive (15) with adjustable speed, linking the case opening (1b) of the intake receptacle (1) with a further plastification unit (18, 19), such as, e.g. an extruder or an injection moulding or a diecasting machine,
comprising, in combination:
c) the feed screw (13, 14) being positioned tangentially to the case surface of the intake receptacle (1) at the case opening (1b) approximately at the level of the size reduction and mixing unit (2),
d) the feed screw (14) including its screw casing (13) being slewable around an axis which is perpendicular to the axis of the intake receptacle (1), and
e) the case opening (1b) being closed by means of a slide and/or a sieve (7).

2. Device as set forth in claim 1 wherein a ventilation opening (21) is provided at the beginning and/or the end of the feed screw (13, 14) for the separation of gaseous parts of the granules produced.

3. Device as set forth in claim 1 or 2 wherein the casing (13) of the feed screw (14) which is positioned in a slewable position at the case opening (1b) is connected with the intake receptacle (1) by means of a connecting socket (5) which is positioned coaxially to the swivelling axis, and wherein the connecting socket holds a liquid draining pipe (6) which can be closed by means of a tap (6a) or a comparable device.

4. Device as set forth in claims 1 to 3 wherein the case opening (1b) can be closed by means of a sieve (7) holding back the plastic granules and allowing only the washing liquid and gases and/or vapours which might be produced in the preparation of the granules to pass through.

5. Device as set forth in one of the above claims wherein the ventilation opening (21) provided at the beginning and/or end of the feed screw (13, 14) is in the form of a hopper for adding fresh plastic granules or other additives.

## Revendications

1. Dispositif de préparation de matière thermoplastique, comportant
a) un réservoir (1) vertical dans la zone du fond duquel sont prévus un outil de fragmentation et de malaxage (2) tournant autour de l'axe du réservoir et une ouverture (1b), pratiquée dans l'enveloppe, pour l'évacuation des granulés de matière plastique produits dans le dispositif et le cas échéant du liquide de lavage utilisé pour la préparation, et
b) une vis sans fin de transport (13, 14), entraînée par un moteur (15) à vitesse réglable, qui relie l'ouverture (1b) du réservoir (1) avec un autre groupe de plastification (18, 19), tel qu'une extrudeuse ou une machine à mouler par injection ou sous pression,
caractérisé par la combinaison suivante :
c) la vis sans fin de transport (13, 14) est placée à peu près à hauteur du groupe de fragmentation et de malaxage (2), tangentiellement à la surface d'enveloppe du réservoir (1), sur l'ouverture (1b),
d) la vis sans fin de transport (14) avec son carter (13) peut pivoter autour d'un axe perpendiculaire à l'axe du réservoir (1) et
e) l'ouverture (1b), pratiquée dans l'enveloppe, peut être fermée au moyen d'un obturateur coulissant et/ou d'un tamis (7).

2. Dispositif selon la revendication 1, caractérisé en ce qu'au début et/ou à la fin de la vis de transport (13, 14), il est prévu une ouverture d'aération (21) pour séparer les composants gazeux des granulés produits.

3. Dispositif selon la revendication 1 ou 2, caractérisé en ce que le carter (13), monté pivotant sur l'ouverture (1b), de la vis de transport (14), est relié au réservoir (1), au moyen d'une tubulure de liaison (5) coaxiale avec l'axe de pivotement et en ce que la tubulure de liaison porte un tube d'évacuation de liquide (6) pouvant être fermé au moyen d'un robinet (6a) ou similaire.

4. Dispositif selon l'une des revendications 1 à 3, caractérisé en ce que l'ouverture (1b) de l'enveloppe peut être fermée au moyen d'un tamis (7) qui empêche le passage des granulés de matière plastique et n'autorise que le passage du liquide de lavage et des éventuels gaz et/ou vapeurs se produisant lors de la préparation des granulés.

5. Dispositif selon l'une des revendications précédentes, caractérisé en ce que l'ouverture d'aération (21), prévue au début et/ou à la fin de la vis de transport (13, 14), est conçue sous la forme d'une trémie pour l'ajout de granulés de matière plastique frais ou d'autres additifs.
